Europäisches Patentamt

European Patent Office

Office européen des brevets

(11) Numéro de publication: **0 152 344**
**A2**

## (12) DEMANDE DE BREVET EUROPEEN

(21) Numéro de dépôt: 85400187.2

(22) Date de dépôt: 05.02.85

(51) Int. Cl.⁴: **B 60 T 8/42**

(30) Priorité: 06.02.84 FR 8401747

(43) Date de publication de la demande:
21.08.85 Bulletin 85/34

(84) Etats contractants désignés:
DE GB IT SE

(71) Demandeur: REGIE NATIONALE DES USINES RENAULT
Boîte postale 103 8-10 avenue Emile Zola
F-92109 Boulogne-Billancourt(FR)

(72) Inventeur: Lombard, Claude
60, rue Corneille
F-78150 Le Chesnay(FR)

(72) Inventeur: Brisset, Jean-Paul
3 bis, square du Gasselet
F-94320 Thiais(FR)

(72) Inventeur: Royer, Claude
17, rue Lucien-Gille
F-54800 Labry(FR)

(74) Mandataire: Colas, Jean-Pierre et al,
Regie Nationale des Usines RENAULT (S.0804)
F-92109 Boulogne Billancourt Cedex(FR)

(54) **Circuit hydraulique à piston pour prévenir le blocage des freins d'un véhicule.**

(57) Dispositif antibloquant pour véhicules à freinage hydraulique comprenant un piston (9) à double effet coulissant dans un cylindre (8) placé dans les canalisations (4, 15) alimentant au moins l'un des récepteurs de roue (17).

Un actuateur (23) peut déplacer le piston (9), couper la liaison hydraulique avec le maître cylindre (1) et augmenter le volume offert au liquide de frein côté cylindre récepteur (17) lorsqu'une tendance au blocage de roue se manifeste.

La variation de pression est continue.

- 1 -

0152344

CIRCUIT HYDRAULIQUE A PISTON POUR PREVENIR LE BLOCAGE DES FREINS D'UN VEHICULE.

La présente invention a pour objet un circuit hydraulique pour freins de véhicule munis d'un système d'antiblocage.

On connait de nombreux dispositifs antidérapants dont la fonction est de réduire la pression appliquée aux freins lorsque l'une au moins des roues d'un véhicule tend à se bloquer brutalement.

Le plus souvent, ces dispositifs comprennent des électrovannes de faible puissance et dont la fonction est de permettre ou d'interrompre le passage du fluide hydraulique du maître cylindre vers les freins, ou des freins vers la bâche et un organe de puissance accumulateur ou pompe rotative chargé de rétablir la pression à un niveau élevé lorsque la ou les roues accroissent leur vitesse pendant le freinage et ne risquent plus de se bloquer. Le fonctionnement est donc essentiellement pulsé au rythme de fonctionnement des électrovannes tout ou rien. Cette pulsation risque d'exciter les différents organes suspendus du véhicule sur leur fréquence propre.

La présente invention a pour objet une amélioration et une simplification de ces dispositifs particulièrement applicable aux véhicules légers et dans laquelle un piston à double effet coulissant dans un cylindre placé sur une canalisation alimentant les récepteurs de roue permet de faire évoluer sans variations brusques la pression appliquée aux freins sous l'action d'une force extérieure au système et liée au glissement dû à la décélération des roues.

Plus précisément, l'invention concerne un dispositif antibloquant pour véhicules à freinage hydraulique caractérisé

.../...

- 2 -

**0152344**

en ce qu'il comprend au moins un piston coulissant dans un cylindre inséré dans les canalisations alimentant l'un des récepteurs de roue et en ce qu'il est prévu des moyens permettant de faire déplacer le piston sous l'action d'une force pouvant contrebalancer les efforts exercés différentiellement sur le dit piston par la pression du maître cylindre d'une part, et du récepteur d'autre part, la dite force F étant sous la dépendance d'un détecteur de glissement ou de blocage de la roue par l'intermédaire d'un actuateur, le déplacement du piston ayant pour effet de faire varier le volume rempli par le liquide du récepteur et par là même, de diminuer ou d'augmenter la pression de freinage tout en renvoyant le volume excédentaire vers le maître cylindre.

Il ne s'agit donc pas du classique limiteur ou compensateur prétaré utilisé pour éviter de trop freiner les roues arrière. Dans le dispositif, objet de la présente demande, absolument rien n'empêche la pression des cylindres récepteurs de roue de monter à une valeur très élevée tant qu'il n'y a pas tendance au blocage des roues.

Ce dispositif permet également, en cas de défectuosité dans le système d'antiblocage, de retrouver du freinage en appuyant plus fort sur la pédale. Cette sécurité s'ajoute à celle obtenue usuellement par des circuits détecteurs de défaut.

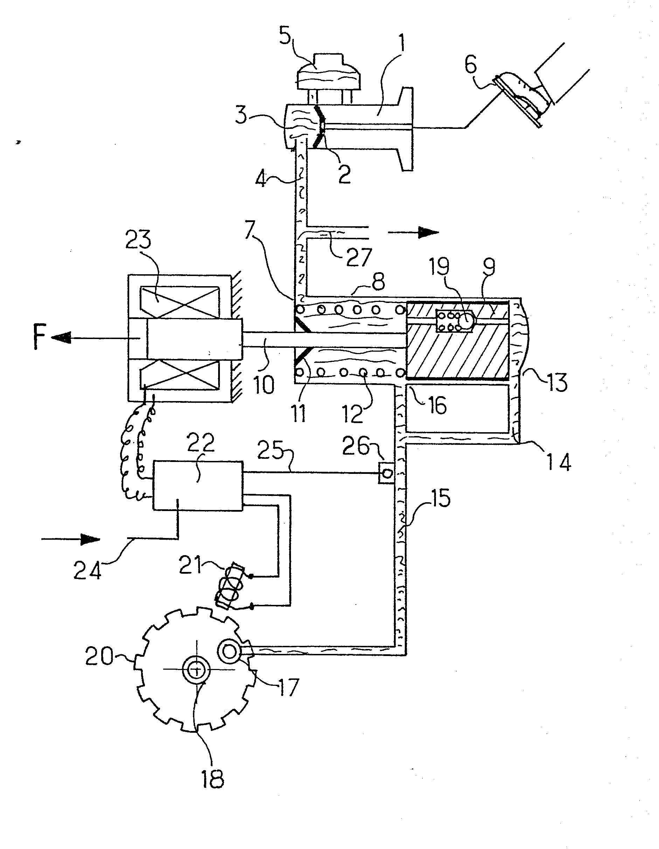

L'invention sera maintenant décrite plus en détails en se référant au dessin annexé sur lequel la figure unique montre un exemple de réalisation d'un circuit hydraulique suivant l'invention.

.../...

Un maître cylindre 1 comprenant au moins un piston 2 comprime dans une chambre 3 et une canalisation 4 le liquide de frein, mis en réserve dans un réservoir 5, sous l'action de la pédale de frein 6. Le piston 2 peut être du type assisté par un vérin pneumatique ou hydraulique non représenté.

Cette canalisation 4 pénètre à l'extrémité 7 d'un cylindre 8 dans laquelle peut se mouvoir un piston à double effet 9 sous l'action d'une tige de commande 10 munie d'un joint d'étanchéité 11. Un faible ressort 12 maintient au repos le piston 9 à l'extrémité 13 du cylindre 8. Une canalisation/part de l'extrémité 13 et rejoint une autre canalisation 15 reliant un orifice central 16 du cylindre 8 au cylindre récepteur d'une roue du véhicule dont le moyeu est 18.

Un clapet anti-retour 19 empêche la pression du liquide de frein d'être plus élevée à l'extrémité 13 qu'à l'extré- mité 7. Il peut être de type classique à bille et ressort. Une cible mobile 20 tourne avec le moyeu 18 devant un capteur de vitesse 21 couplé à un circuit électronique 22.

Ce circuit électronique est programmé de manière à commander un vérin 23 lorsque la roue décélère brusquement. Ce vérin applique alors une force F au piston 9 par l'intermédiaire de la tige de commande 10.

Le vérin 23 représenté sur la figure est un électroaimant, mais cette forme de réalisation n'est pas préférentielle. Tout type de vérin, pneumatique, hydraulique, à moteur électrique, peut convenir à la seule condition d'être reversible et à commande électrique. Ce vérin doit également exercer un effort relativement indépendant de la position du piston 9 dans le cylindre 8.

Des informations d'autres calculateurs du véhicule peuvent être introduites par l'entrée auxiliaire 24 du circuit électronique 22. Ces informations peuvent concerner la vitesse des

- 4 -

0152344

autres roues, l'état du sol etc....

Une autre entrée auxiliaire 25 reliée à un capteur de pression 26 placé sur la canalisation 15 fournit au circuit électronique 22 une information sur la tendance à l'annulation de la pression dans la canalisation 15.

Le capteur 26 peut être un simple contact.

D'autres canalisations 27 peuvent être greffées sur la canalisation 4 pour l'alimentation en liquide de frein d'autres roues du véhicule.

Le fonctionnement du dispositif est très simple. Lorsque le conducteur exerce un effort de freinage par l'intermédiaire de la pédale 6, le liquide de frein est comprimé dans la chambre 3 et passe par les canalisations 4 et 15 jusqu'au cylindre récepteur 17 puisque l'orifice 16 est ouvert,le piston 9 étant en position de repos à l'extrémité 13 sous l'effet du ressort 12.

Si l'effort de freinage est trop important, entraînant une tendance au blocage du moyeu 18 de la roue, le circuit électronique 22 délivre un courant dans le vérin 23 produisant une force F dont d'amplitude dépend de divers paramètres et notamment, de la vitesse de décélération du moyeu 18.

Une faible force F1 déplacera le piston jusqu'à ce qu'il obture la canalisation 15 en 16. La pression est stabilisée dans le cylindre récepteur 17.

Une force plus importante F2 produira un déplacement plus important du piston 9 vers l'extrémité 7 refoulant du liquide vers la chambre 3 et relevant le pied du conducteur, indiquant la tendance au blocage. Dans le même temps, un volume supplémentaire est offert au liquide de frein contenu dans les canalisations 14, 15 et le cylindre récepteur 17. La pression effectivement appliquée au freinage diminue donc jusqu'à s'annuler s'il y a lieu, ce qui est le but recherhé.

.../...

Le clapet 19 assure un retour rapide du liquide vers le réservoir 3 qui permet le retour en position de repos du piston 9, du côté 13 du cylindre 8, lorsque le conducteur cesse de freiner.

La force F est à tout moment, lorsque la canalisation 15 est obturée par le piston 9, contrebalancée par la pression différentielle sur les deux faces du piston 9, le ressort 12 pouvant être négligé.

Pour éviter des oscillations de pression dues à la création de poches vides de liquide si la pression dans la canalisation 15 tombe en dessous de la pression nulle, le capteur 26 suspend ou réduit la force F appliquée au piston.

Les dimensions du cylindre 8 ont été exagérées sur la figure pour mieux en montrer les détails. Pour un véhicule léger, le diamètre et la course du piston 9 sont de l'ordre du centimètre, ces dimensions étant indicatives et ne limitant pas la portée de l'invention.

Le vérin 23 sera très rarement sollicité à sa force F maximale qui correspond à un freinage d'urgence dans de très mauvaises conditions d'adhérence.

Il fonctionnera plus fréquemment à des forces faibles. Au total, le taux de marche du vérin sera réduit ce qui permet de le sous dimensionner thermiquement.

La surface frottante du piston 9 pourra utilement être recouverte par l'un des produits utilisés usuellement pour assurer à la fois un faible frottement et une bonne étanchéité et notamment, ceux à base de polytretrafluorethylène. Le dispositif perdrait en effet de son efficacité en cas de fuites importantes, le long du piston 9.

.../...

REVENDICATIONS

1. Dispositif antibloquant pour véhicules à freinage hydraulique caractérisé en ce qu'il comprend au moins un piston (9) coulissant dans un cylindre (8) inséré dans les canalisations (4, 15) alimentant l'un des récepteurs de roue (17) et en ce qu'il est prévu des moyens parmettant de faire déplacer le piston (9) sous l'action d'une force (F) pouvant contrebalancer les efforts exercés différentiellement sur le dit piston (9) par la pression du maître cylindre (1) d'une part, et du récepteur (17) d'autre part, la dite force F étant sous la dépendance d'un détecteur (21, 22) de glissement ou de blocage de la roue par l'intermédiaire d'un actuateur (23), le déplacement du piston (9) ayant pour effet de faire varier le volume rempli par le liquide de récepteur (17) et par là même, de diminuer ou d'augmenter la pression de freinage tout en renvoyant le volume excédentaire vers le maître cylindre (1)

2. Dispositif selon 1, caractérisé en ce que le cylindre 8 comprend au moins une entrée de fluide à une extrémité (7) et deux départs interconnectés dont l'un est placé à l'extrémité opposée (13), l'autre étant situé dans la partie centrale (16), toujours découverte par le piston (9) dans sa position de repos contre l'autre extrémité (13)

3. Dispositif selon l'une quelconque des revendications 1 ou 2 caractérisé en ce qu'il est prévu un clapet anti-retour (19) empêchant la pression de fluide d'être plus élevée dans la canalisation de sortie (15) que dans la canalisation d'entrée (4)

4. Dispositif selon l'une quelconque des revendications 1 à 3 caractérisé en ce que l'actuateur (23) est un vérin électrique.

0152344

European Patent
Office

**EUROPEAN SEARCH REPORT**

**0152344**

Application number

EP 85 40 0187

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-3 698 772 (NIXON) <br> * Column 2, lines 40-66; figure 1 * | 1,4 | B 60 T 8/42 |
| A | DE-A-2 211 921 (TELDIX) | | |
| A | US-A-3 725 858 (ARAI) | | |

| TECHNICAL FIELDS SEARCHED (Int. Cl.4) |
|---|
| B 60 T 8/32 |

The present search report has been drawn up for all claims

| Place of search | Date of completion of the search | Examiner |
|---|---|---|
| THE HAGUE | 13-05-1985 | HARTEVELD C.D.H. |